# EUROPEAN PATENT APPLICATION

(11) **EP 1 672 895 A1**
(43) Date of publication of application: **21.06.2006**
(21) Application number: 05257728.5
(22) Date of filing: 15.12.2005
(51) Int. Cl.: H04M 3/42

(54) **Telephone and electronic mail communication system**

(30) Priority: 15.12.2004 JP 2004363533
(71) Applicant: ORION ELECTRIC CO., Ltd., Fukui 915-8555 (JP)
(72) Inventor: Takayama, Hiroyuki, Orion Electric Co., Ltd., Echizen-city Fukui 915-8555 (JP); Kobayashi, Masakazu Orion Electric Co., Ltd., Echizen-city Fukui 915-8555 (JP)
(74) Representative: Paget, Hugh Charles Edward

(57) **Abstract**

To provide a telephone communication system in which the occurrence of the situation of talking on the phone by using a hands-free device (i.e., while doing something such as driving a car) is prevented or reduced in talking by using a cellular phone. The present invention makes a caller voluntarily cancel the calling or cut short the talking by sending and saving a connection state between a hands-free device 110 and a cellular phone 11 to an exchange 15; if a phone call is made to the cellular phone 11, checking the connection state of the hands-free device 110 to the cellular phone 11; and if the cellular phone 11 is using the hands-free device 110, informing that before establishing a connection between the caller side and the cellular phone 11.

## Description

### BACKGROUND OF THE INVENTION

### Field of the Invention

The present invention relates to a telephone communication system or a mail sending/receiving system using a wireless communication terminal, and specifically to a telephone communication system or a mail sending/receiving system which takes into account of the case where a wireless communication terminal is connected with a hands-free device.

### Description of the Related Art

As a device for enabling a user to talk on the telephone without holding a cellular handset, there has been a hands-free device. Conventional arts relating to the hands-free device are disclosed by Japanese Patent Laid-Open Publication No. 2002-10358 (patent document 1), Japanese Patent Laid-Open Publication No. 2002-290537 (patent document 2) and the like.

It is assumed that a user uses a hands-free device of a cellular phone as the user cannot hold a handset of the cellular phone (this is why the user uses a hands-free device). Even in such a case, the user is usually doing something (such as driving a car), while talking on the phone. Although a user is relieved of holding or operating a handset of the cellular phone by using a hands-free device, the user is deprived of attention and concentration on the work the user is doing while talking on the phone. Accordingly, it is inappropriate for the user to talk on the phone while doing something (particularly while driving a car).

In such a case, the caller side cannot recognize whether the counterpart who the caller wants to make a phone call is using a hands-free device or not, in the conventional art. As the caller calls up (makes a phone call to) the counterpart whether or not the counterpart is using a hands-free device, a situation such as "talking on the phone while doing something" cannot be prevented or deterred from.

### SUMMARY OF THE INVENTION

The present invention intends to provide a telephone communication system or a mail sending/receiving system for preventing or reducing the occurrence of the situation of talking on the phone by using a hands-free device (i.e., while doing something such as driving a car).

A telephone communication system according to claim 1 is a telephone communication system comprising a wireless communication terminal, a base station for sending and receiving a signal to and from the wireless communication terminal via a wireless access network, an exchange connected with the base station, and a relaying network interconnecting the exchanges or an IP network connected via inter-network connecting devices, wherein when said wireless communication terminal is connected with a hands-free device, the wireless communication terminal sends information indicating that the wireless communication terminal is connected with said hands-free device to said base station, said exchange or a server provided in said IP network for saving the information; and when a phone call is made to the wireless communication terminal connected with said hands-free device, said base station, said exchange or said server sends information indicating that said called wireless communication terminal is connected with said hands-free device to the caller.

According to the abovementioned configuration, when a wireless communication terminal represented by a cellular handset is connected with a hands-free device, information indicating that the hands-free device is connected therewith is sent to a base station, an exchange or a server and saved there. When a phone call is made to a wireless communication terminal connected with a hands-free device, information indicating that "the counterpart's wireless communication terminal is connected with a hands-free device" is sent to the caller.

A telephone communication system according to claim 2 is the telephone communication system according to claim 1, wherein when a phone call is made to the wireless communication terminal connected with said hands-free device, said base station, said exchange or said server sends information indicating that said wireless communication terminal of the called party is connected with said hands-free device to said caller before a connection between the wireless communication terminal and said caller is established.

According to the abovementioned configuration, information indicating that "the counterpart's wireless communication terminal is connected with a hands-free device" is sent to the caller, before a connection between a wireless communication terminal and a caller is established (i.e., before "talking on the phone" is performed) .

A telephone communication system according to claim 3 is the telephone communication system according to claim 1 or 2, wherein at said time of making a phone call, said caller side sends an operation directing signal indicating a request of said caller in the case where said wireless communication terminal of the called party is connected with a hands-free device to said base station, said exchange or said server, or said caller side sends an operation directing signal indicating a request of said caller according to the state that said wireless communication terminal of the called party is connected with a hands-free device to said base station, said exchange or said server after it received information indicating that said wireless communication terminal of the called party is connected with said hands-free device from said base station, said exchange or said server; and said base station, said exchange or said server performs predetermined operation according to the operation directing signal.

According to the abovementioned configuration, at the time of making a phone call or after receiving information indicating that "the counterpart's wireless communication terminal is connected with a hands-free device" from a base station, an exchange or a server, an operation directing signal indicating a request in the case where "the counterpart's wireless communication terminal is connected with a hands-free device" (for example, sending a message "Contact us as soon as possible" or "Contact us when you are free" to the counterpart, or a phone calling request) is sent to the base station, the exchange or the server, and process of sending a message or establishing a connection is performed.

A mail sending/receiving system according to claim 4 is a mail sending/receiving system comprising a wireless communication terminal, a base station for sending and receiving a signal to and from the wireless communication terminal via a wireless access network, an exchange connected with the base station, a relaying network interconnecting the exchanges or an IP network interconnecting said exchanges or said base stations via inter-network connecting devices, and a server provided to the IP network, wherein when said wireless communication terminal is connected with a hands-free device, the wireless communication terminal sends information indicating that the wireless communication terminal is connected with said hands-free device to said base station, said exchange or said server for saving the information; and when a piece of mail is sent to a mail address allocated to the wireless communication terminal connected with said hands-free device, said base station, said exchange or said server sends information indicating that said wireless communication terminal corresponding to the destination address of said piece of mail is connected with said hands-free device to an address from which said piece of mail is sent.

According to the abovementioned configuration, when a wireless communication terminal represented by a cellular handset is connected with a hands-free device, information indicating that the hands-free device is connected therewith is sent to a base station, an exchange or a server and saved there. When a piece of mail is sent to a mail address allocated to a wireless communication terminal connected with a hands-free device, information indicating that "the counterpart's wireless communication terminal is connected with a hands-free device" is sent to an address from which the piece of mail is sent.

A mail sending/receiving system according to claim 5 is the mail sending/receiving system according to claim 4, wherein when a piece of mail is sent to a mail address allocated to a wireless communication terminal connected with said hands-free device, said base station, said exchange or said server sends information indicating that said wireless communication terminal corresponding to the destination address of said piece of mail is connected with said hands-free device to an address from which said piece of mail is sent without distributing said piece of mail to the wireless communication terminal.

According to the abovementioned configuration, information indicating that "the counterpart's wireless communication terminal is connected with a hands-free device" is sent to an address from which a piece of mail is sent with no piece of mail is distributed to a wireless communication terminal.

A mail sending/receiving system according to claim 6 is the mail sending/receiving system according to claim 4 or 5, wherein at said time of sending a piece of mail, a sender side of said piece of mail sends operation directing information indicating a request of said sender of the mail in the case where said wireless communication terminal corresponding to the destination address of said piece of mail is connected with a hands-free device to said base station, said exchange or said server, or said mail sender side sends operation directing information indicating a request of said sender of the mail according to the state that said wireless communication terminal corresponding to the destination address of said piece of mail is connected with a hands-free device to said base station, said exchange or said server after it received information indicating that said wireless communication terminal corresponding to the destination address of said piece of mail is connected with said hands-free device from said base station, said exchange or said server; and said base station, said exchange or said server performs predetermined operation according to the operation directing information.

According to the abovementioned configuration, at the time of sending a piece of mail or after receiving information indicating that "the counterpart's wireless communication terminal is connected with a hands-free device" from a base station, an exchange or a server, an operation indicating signal indicating a request in the case where "the counterpart's wireless communication terminal is connected with a hands-free device" (for example, sending a message "Contact us as soon as possible" or "Contact us when you are free" to the counterpart or a mail distributing request) is sent to the base station, the exchange or the server, and process of sending a message or sending a piece of mail is performed.

A telephone communication system or a mail sending/receiving system according to claim 7 is the telephone communication system or the mail sending/receiving system according to any one of claim 1 to claim 6, wherein a switch is provided for a headphone terminal section of said wireless communication terminal, and said switch is turned on when a connection terminal of said hands-free device is connected and turned off when the connection terminal is disconnected so that the system determines whether said wireless communication terminal is connected with said hands-free device or not by determining whether said switch is on or off.

### BRIEF DESCRIPTION OF THE DRAWINGS

Fig. 1 is a block diagram showing an outline of a configuration of a telephone communication system according to embodiment 1.
FIG. 2 is a flowchart showing an outline of operation relating to the present invention of a cellular phone.
FIG. 3 is a flowchart showing an outline of operation relating to the present invention of the telephone communication system according to embodiment 1.
FIG. 4 is a circuit block diagram illustrating an example of a headphone terminal.
FIG. 5 is a diagram showing an exemplary display screen of the cellular phone.
FIG. 6 is a block diagram showing an outline of a configuration of a mail sending/receiving system of the embodiment 2.
FIG. 7 is a flowchart showing an outline of operation relating to the present invention of a mail sending/receiving system of the embodiment 2.

### DETAILED DESCRIPTION OF THE PREFERRED EMBODIMENTS

Specific embodiments of the present invention will be described with reference to the attached drawings. The embodiments below are merely examples for implementing the present invention and not intend to limit the present invention.

### [Embodiment 1]

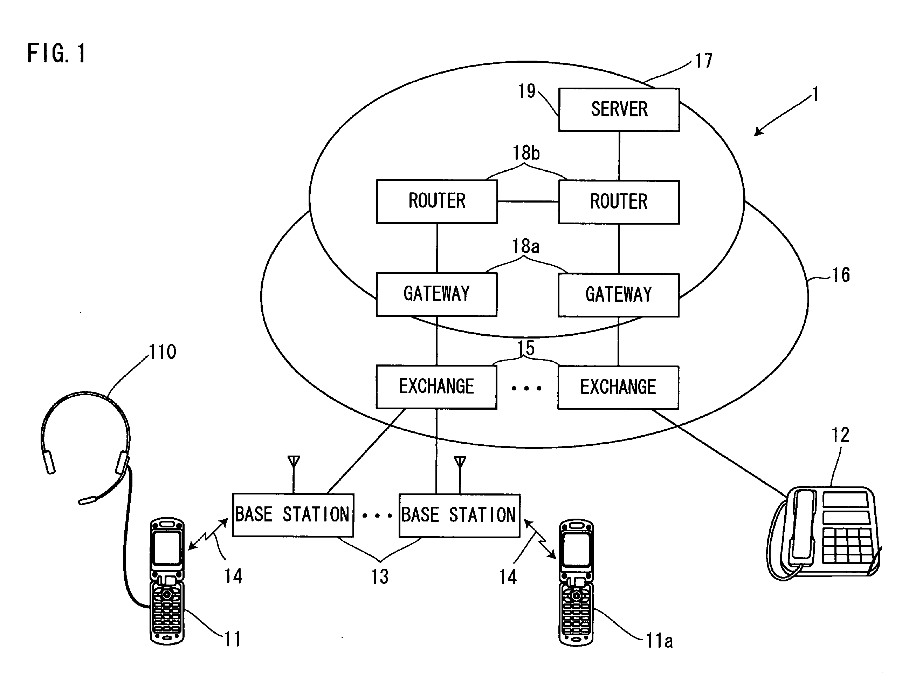

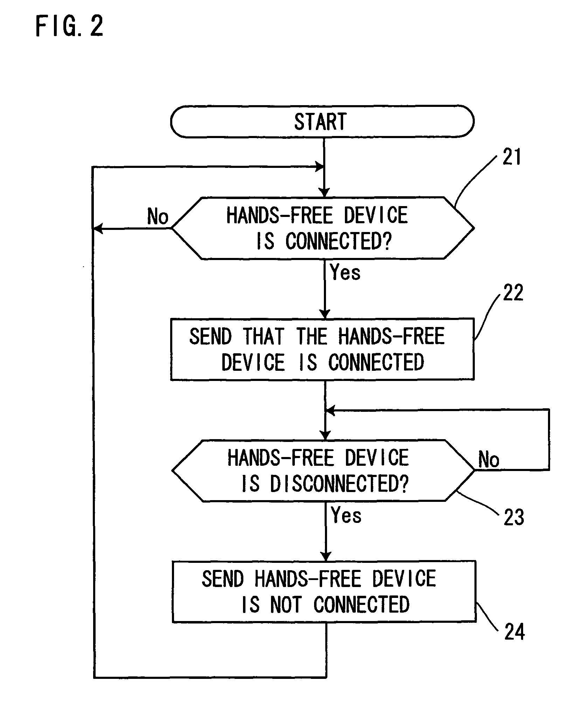

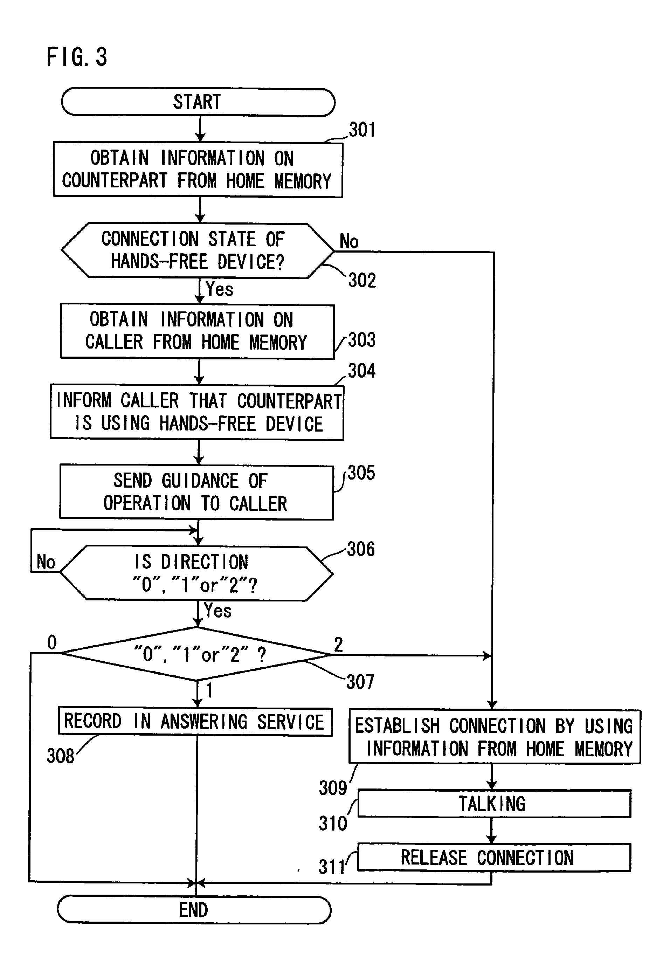

FIG. 1 is a block diagram showing an outline of a configuration of a telephone communication system according to the embodiment. FIG. 2 is a flowchart showing an outline of operation relating to the present invention of a cellular phone configuring the telephone communication system. FIG. 3 is a flowchart showing an outline of operation relating to the present invention of the telephone communication system.

As shown in FIG. 1, a telephone communication system 1 of the embodiment includes a cellular phone 11, which is a wireless communication terminal, a fixed telephones 12, base stations 13 for sending and receiving a signal to and from the cellular phone 11 via a wireless access network 14, exchanges 15 connected with the base stations 13, and a relaying network 16 interconnecting the exchanges 15 or an IP network 17 connected via inter-network connecting devices of gateways 18a, routers 18b, and a server 19 provided in the IP network 17.

With reference to FIG. 2, operation relating to the present invention of the cellular phone 11 will be outlined. At step 21, the cellular phone 11 determines whether a hands-free device 110 is connected or not. If it is connected, information indicating that the hands-free device 110 is connected is sent to the base stations 13 over the wireless access network 14 (step 22). At step 23, the cellular phone 11 determines whether the hands-free device 110 is disconnected or not. If it is disconnected, information indicating that the hands-free device 110 is disconnected is sent to the base stations 13 over the wireless access network 14 (step 24). Then, operation returns to step 21. With this process, whether the cellular phone 11 is connected with the hands-free device 110 is sent to the base stations 13. The base stations 13, which received the information, sends the information to the exchanges 15 (although simplified in the figure, the exchange 15 is actually formed by plural hierarchical exchanges), which stores the information in the exchange 15 that has home memory (storage for information on the cellular phone 11 (the current position information of the cellular phone 11 or personal information of the owner)) of the cellular phone 11 over a relaying network 16.

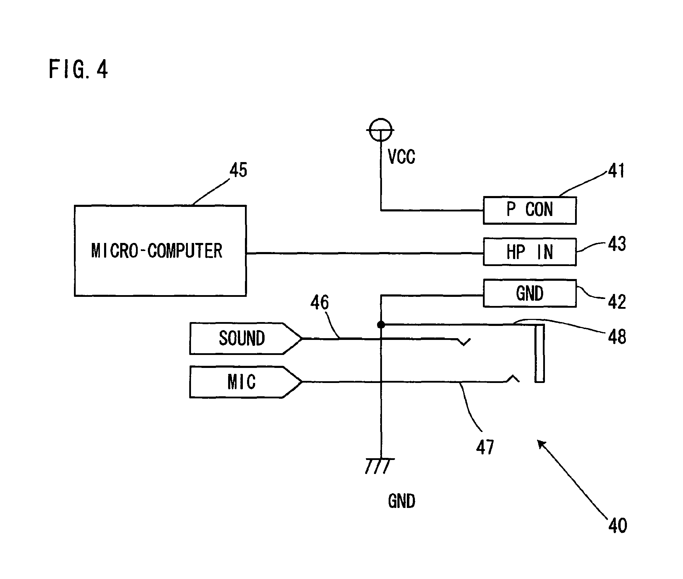

FIG. 4 shows a circuit block diagram illustrating an example of a headphone terminal part of the cellular phone 11. The headphone terminal section 40 includes a Pcon terminal 41 to be connected with a constant-voltage power supply Vcc, a GND terminal 42 to be connected with a ground, and an HPIN terminal 43 to be connected with a terminal of a micro-computer 45, which is a control unit of the cellular phone 11. When a contact button of the hands-free device 110 is not inserted into (connected with) the headphone terminal section 40, the HPIN terminal 43 contacts the GND terminal 42 as it is biased by a spring, by which a low- (grand) level signal is inputted to the terminal of the micro-computer 45. When a contact button of the hands-free device 110 is inserted into (connected with) the headphone terminal section 40, the HPIN terminal 43 is pushed up (or down) by the contact button, detached from the GND terminal 42 and contacts the Pcon terminal 41. This makes a high (Vcc)-level signal to be inputted into the terminal of the micro-computer 45. With such a configuration (switch structure), the cellular phone 11 (micro-computer 45) can detect whether the hands-free device 110 is connected with it or not (determination at step 21, step 23). The contact button of the hands-free device 110 has a sound signal line, a mic signal line, and a GND signal line. When the lines are connected with the headphone terminal 40, they are connected with a sound signal line 46, a mic signal line 47 and a GND signal line 48, respectively.

Now, an outline of operation relating to the present invention of the telephone communication system 1 of the embodiment will be described with reference to FIG. 3. When a cellular phone 11a or a fixed telephone 12 calls the cellular phone 11, the exchange 15 connected with the fixed telephone 12 or the exchange 15 connected with the base station 13 which received a signal from the cellular phone 11a obtains information on the counterpart (the cellular phone 11, which is the called side) from the exchange 15 which has home memory of the cellular phone 11 (step 301), and determines whether the cellular phone 11 is connected with the hands-free device 110 or not (step 302). If it is determined No at step 302 (if the hands-free device 110 is not connected), the exchange 15 uses the information from the home memory obtained at step 301 and establishes a connection between the cellular phone 11 and the cellular phone 11a or the fixed telephone 12 (step 309), releases (step 311) the connection after the talking on the phone ends (step 310) and ends the process.

If it is determined Yes (hands-free device 110 is connected) at step 302, the exchange 15 obtains information on the caller from the caller's home memory at step 303 and sends audio information such as "The counterpart's cellular phone is connected with a hands-free device. The user of the phone is possibly driving a car" (the audio information is recorded previously or processed and generated by a computer provided in the exchange 15.) to the caller (the cellular phone 11a or the fixed phone 12) at step 304. Then, the exchange 15 sends audio information such as "If you want to cancel this calling, press "0", if you want to record a message in the answering phone service, press "1", and if you want to talk with the counterpart, press "2""(step 305), and waits for an operation directing signal (a push signal corresponding to "0", "1" or "2" from the cellular phone 11a or the fixed telephone 12) (step 306). At step 307, the system determines the direction. If the direction is "0" (to cancel the calling), the system releases the connection between the exchange 15 and the cellular phone 11a or the fixed telephone 12. If the direction is "1" (to record a message in the answering service), the system records a message in the answering phone service. If the direction is "2" (to talk), operation proceeds to step 309 where talking on the phone is processed thereafter and the process ends.

Information sent to the caller at step 304 or step 305 can be sent by mail by obtaining the mail address when information on the caller is obtained at step 303, or by a Web page with an input form, instead of sending audio information as mentioned above. Although "cancel the calling", "record a message in the answering service" and "talk" exemplify selections for the operation request in the above description, the present invention can be adapted to make one of the other types of process such as generating a message such as "You have a message "Mr. *** asks you to contact him as soon as possible"" or "You have a message "Mr. *** asks you to contact him when you are free"" by using the information on the caller (such as a name) obtained at step 303 and sending the message to the cellular phone 11 (called side), or informing that the hands-free device 110 is disconnected from the counterpart's cellular phone (cellular phone 11) (the exchange 15 or the like informs a calling person by a sound message or a piece of mail, when it is detected that the hands-free device is disconnected). In addition, although the embodiment is adapted to make selection of an operation request after the information such as "The counterpart's wireless communication device is connected with a hands-free device" is received, information on "operation direction in the hands-free state" can be previously added when the calling is made. By adding and sending the information on "operation direction in the hands-free state (for example, to cancel the calling when the counterpart is in the hands-free state)" previously at making the phone call, the process of step 304 - step 306 in FIG. 3 can be cut so that processing time can be shorten, traffic can be reduced (effectively use the line resource) and convenience for users can be improved. Specifically, by setting " (automatically) cancel the calling when the counterpart is in the hands-free state" as a default setting for making a phone call, information (operation directing signal) such as "cancel the calling when the counterpart is in the hands-free state" is sent each time a phone call is made so that the exchange which receives this information can automatically perform operation such as "determine the state of the counterpart (called side) and if it is in the hands-free state, cancel the calling, and if it is not in the hands-free state, establish a connection with the counterpart".

As mentioned above, according to the telephone communication system 1 of the embodiment, information such as "The counterpart's wireless communication terminal is connected with a hands-free device" is sent to the caller before a connection between the wireless communication terminal and the caller side is established, and the caller who received the information can voluntarily cancel the calling before "talking on the phone" is performed. Even if a caller wants to talk on the phone over an urgent case, the caller tries to cut short the talking as the caller knows that the counterpart is in the hands-free state. Therefore, the present invention can prevent or reduce talking on the phone with a person using a hands-free device (i.e. , while the person is doing something such as driving a car or the like). An operation directing signal indicating a request of the caller side in the case of "the counterpart's wireless communication terminal is connected with a hands-free device" (for example, to send a message such as "Contact us as soon as possible" or "Contact us when you are free" to the counterpart, or a calling request or a request for recording in the answering machine) is sent. According to the signal, the process such as sending a message or establishing a connection can be performed. This allows measures to be taken can be selected according to the emergency or the like, which is quite convenient for both the caller side and the called side.

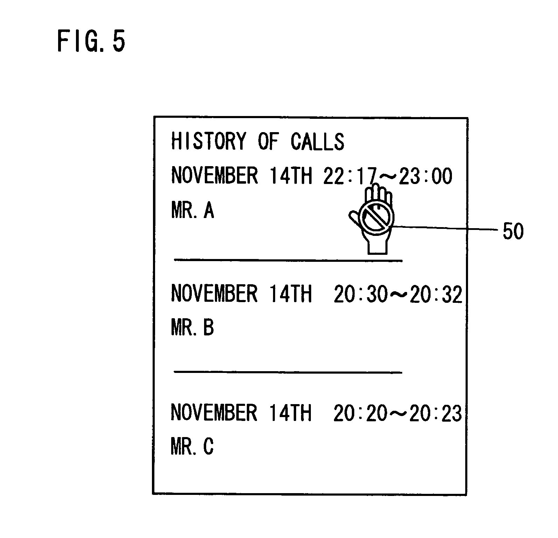

If the cellular phone 11 is called when it is connected with the hands-free device 110, the present invention can be adapted to save information such as "this phone call is made with a hands-free device 110" as history information and display the history information on a display unit on the cellular phone 11 according to a display request or the like (an exemplary display screen is shown in FIG. 5. An icon 50 shows that it is a hands-free calling.), or save history information such as "this phone call is made with a hands-free device 110" in home memory of the cellular phone 11. A communication channel for information connecting the caller side and the called side can be: the cellular phone 11 - the wireless access network 14 - the base station 13 - the exchange 15 - the relaying network 16 - the exchange 15 - the fixed telephone 12 or what intervened by the IP network 17 via inter-network connecting devices (gateway 18a, router 18b) between the exchange 15 (calling side) and the exchange 15 (called side) (so-called "IP telephone"). Due to the change of the communication channel, the storage of "information relating whether the cellular phone 11 is connected with the hands-free device 110 or not" (in the embodiment, it is the exchange 15) or the main body for performing the process shown in FIG. 3 (in the embodiment, it is the exchange 15) can be adapted with changes if needed (for example, the base station 13 or the server 19).

### [Embodiment 2]

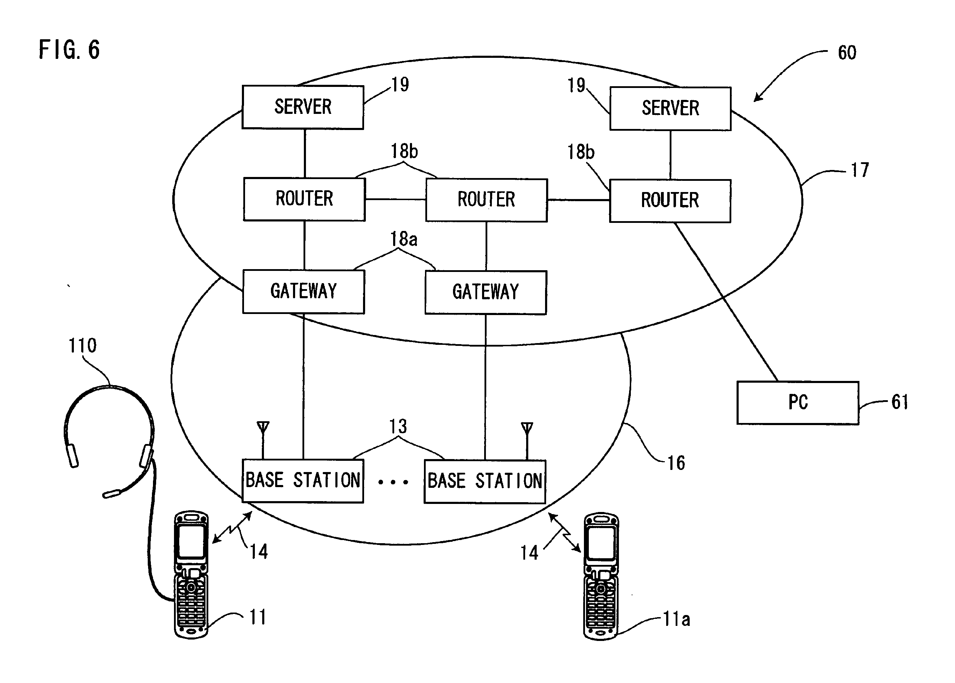

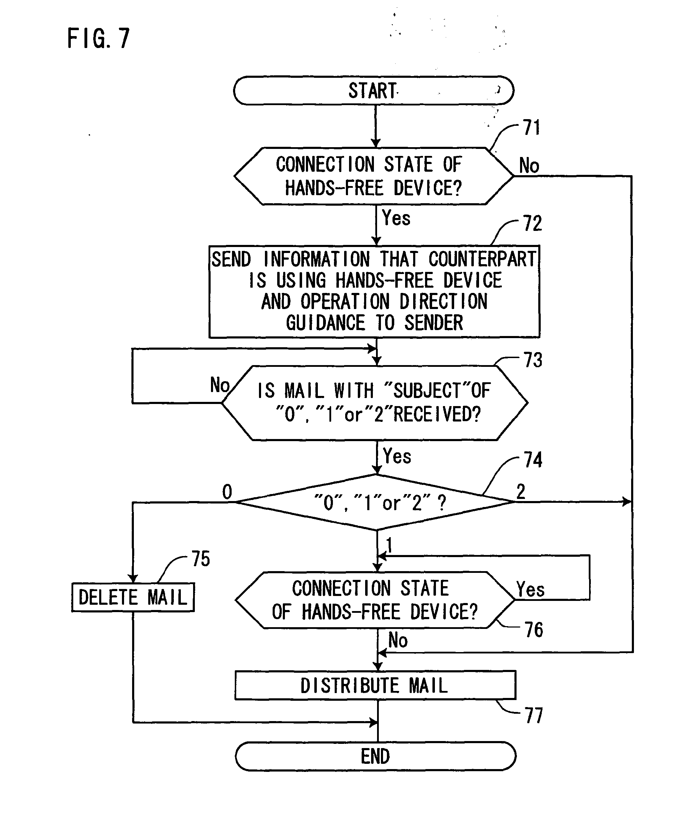

FIG. 6 is a block diagram showing an outline of a configuration of a mail sending/receiving system of the embodiment. FIG. 7 is a flowchart showing an outline of operation relating to the present invention of a mail sending/receiving system. The same reference numbers in the embodiment 2 are used to designate the same components as those in the embodiment 1.

As shown in FIG. 6, a mail sending/receiving system 60 of the embodiment includes a cellular phone 11, which is a wireless communication terminal, a PC 61, which is an information terminal, base stations 13 for sending and receiving a signal to and from the cellular phone 11 via a wireless access network 14, gateways 18a, which are inter-network connecting devices connected with base station 13, an IP network 17 connected via routers 18b, which are inter-network connecting devices, and servers 19 provided in the IP network 17.

As the outline of operation for detecting the "hands-free device connection state" of the cellular phone 11 in the embodiment is the same as that in the embodiment 1 (FIG. 2), description of the outline will be omitted here. By the process of FIG. 2, information on "hands-free device connection state" sent to the base stations 13 is sent to the server 19 (a server corresponding to the domain of the mail address allocated to the cellular phone 11) via the gateways 18a, routers 18b and the IP network 17 and saved in the servers 19.

Now, with reference to FIG. 7, an outline of operation relating to the present invention of the mail sending/receiving system 60 of the embodiment will be described. When a piece of mail is sent from the cellular phone 11a or the PC 61 to the cellular phone 11 (mail address allocated to the cellular phone 11), the piece of mail is sent to the server 19 (a server corresponding to the domain of the mail address allocated to the cellular phone 11) via the IP network 17. The server 19 which received the piece of mail determines whether the cellular phone 11 (the cellular phone corresponding to the destined mail address) is connected with the hands-free device 110 or not (step 71). If it is determined No at step 71 (if the cellular phone is not connected with the hands-free device 110), operation proceeds to step 77 where the piece of mail is distributed (the piece of mail is distributed from the base station 13 to the cellular phone 11) and the process ends.

If it is determined Yes at step 71 (if the cellular phone is connected with the hands-free device 110), the mail sending/receiving system 60 sends a piece of mail including contents such as "The counterpart's cellular phone is connected with a hands-free device. The user of the phone is possibly driving a car" and contents such as "If you want to cancel sending of the piece of mail, return a piece of mail with the subject "0", if you want to send the piece of mail after the hands-free device is disconnected from the cellular phone, return a piece of mail with the subject "1", and if you want to send the piece of mail immediately, return a piece of mail with the subject "2"" to the sender of the mail (address of the mail sender) at step 72 and waits for a return (mail) from the address of the mail sender (step 73). The system determines the direction at step 74 (determines according to the sender's address and the "subject"). If the direction is "0" (to cancel sending of the piece of mail), the system deletes the received piece of mail (without distributing the piece of mail to the cellular phone 11) and ends the process. If the direction is "1" (to send the piece of mail after the hands-free device is disconnected), the system waits for the hands-free device 110 to be disconnected at step 76, distributes the piece of mail after the hands-free device 110 is disconnected (step 77) and ends the process. If the direction is "2" (to send the piece of mail), operation proceeds to step 77 where the piece of mail is distributed and the process ends.

Sending of information to the mail sender and obtaining of the direction at step 72 - step 74 can be performed by sending an address of a Web page or the like which contains an input form (a page for obtaining the direction) by mail instead of sending a piece of mail including a guidance and waiting for a return mail as mentioned above. As a selection for operation requests, the process such as generating a message (audio) such as "You have a message "Mr. *** asks you to contact him as soon as possible"" or "You have a message "Mr. *** asks you to contact him when you are free"" by using the information obtained by the abovementioned input form (such as a name) and sending the message to the cellular phone 11 (the base station 13 calls the cellular phone 11 and plays the sound message) can be added. In addition, although the embodiment is adapted to make selection of an operation request after the information such as "The counterpart's wireless communication device is connected with a hands-free device" is received, information on "operation direction in the hands-free state" can be previously added for sending when the piece of mail is sent.

As mentioned above, according to the mail sending/receiving system 60 of the embodiment, information such as "The counterpart's wireless communication terminal is connected with a hands-free device" is sent to a mail sender before a piece of mail is distributed to the cellular phone 11. Therefore, the mail sender who received the information can voluntarily cancel or prolong the "distribution of the piece of mail to the cellular phone 11" (until the hands-free device is disconnected) or send an audio message instead of a piece of mail. As the present invention can prevent or reduce distribution of a piece of mail to a cellular phone using a hands-free device when the cellular phone is using the hands-free device, it can prevent the called party's attention from deviated particularly when the called party is driving a car (checking the display screen of the cellular phone 11).

Although information sent from the cellular phone 11 to the base station 13 is "connection state of a hands-free device" in the embodiments, additional information such as "driving a car" or the like can be sent if a user of the cellular phone 11 sets as needed. Accordingly, in the process of FIG. 3 (step 302) or FIG. 7 (step 71), whether the user is "driving a car" or not is determined, and if it is determined that it is not dangerous to talk or exchanging mail by using the hands-free device, talking or the like can be unconditionally enabled.

According to a telephone communication system of claim 1 of the present invention, comprising a wireless communication terminal, a base station for sending and receiving a signal to and from the wireless communication terminal via a wireless access network, an exchange connected with the base station, and a relaying network interconnecting the exchanges or an IP network connected via inter-network connecting devices, wherein when said wireless communication terminal is connected with a hands-free device, the wireless communication terminal sends information indicating that the wireless communication terminal is connected with said hands-free device to said base station, said exchange or a server provided in said IP network for saving the information; and when a phone call is made to the wireless communication terminal connected with said hands-free device, said base station, said exchange or said server sends information indicating that said called wireless communication terminal is connected with said hands-free device to the caller, that the information indicating that "the counterpart's wireless communication terminal is connected with a hands-free device" is sent to the caller (that the caller recognizes that the counterpart is using a hands-free device means that the caller can infer that the counterpart is in a state of driving a car or the like) so that the caller who received the information can voluntarily cancel the calling or cut short the talk, which prevents or reduces talking on the phone with a person using a hands-free device (i.e., while the person is doing something such as driving a car or the like).

According to the telephone communication system of claim 1 according to claim 2 of the present invention, when a phone call is made to the wireless communication terminal connected with said hands-free device, said base station, said exchange or said server sends information indicating that said wireless communication terminal of the called party is connected with said hands-free device to said caller before a connection between the wireless communication terminal and said caller is established, that the information indicating that "the counterpart's wireless communication terminal is connected with a hands-free device" is sent to the caller so that the caller before a connection between the wireless communication terminal and the caller side is established (i.e., before "talking on the phone" is performed) so that the caller can voluntarily cancel the calling before the "talking on the phone" is performed, which can prevent talking on the phone with a person using a hands-free device (i.e., while the person doing something such as driving a car). This also gives an additional effect of saving the circuit resource due to the reduction in the number of "connection settings".

According to the telephone communication system of claim 1 or 2 according to claim 3 of the present invention, wherein at the time of said calling, said caller side sends an operation directing signal indicating a request of said caller in the case where said wireless communication terminal of the called party is connected with a hands-free device to said base station, said exchange or said server, or said caller side sends an operation directing signal indicating a request of said caller according to the state that said wireless communication terminal of the called party is connected with a hands-free device to said base station, said exchange or said server after it received information indicating that said wireless communication terminal of the called party is connected with said hands-free device from said base station, said exchange or said server; and said base station, said exchange or said server performs predetermined operation according to the operation directing signal, that the operation directing signal indicating a request in the case where "the counterpart's wireless communication terminal is connected with a hands-free device" (for example, sending a message "Contact us as soon as possible" or "Contact us when you are free" to the counterpart or a phone calling request) is sent to the base station, the exchange or the server, and process of sending a message or establishing a connection is performed, which can not only prevent talking on the phone with a person using a hands-free device but also allow measures to be taken according to the emergency or the like, which is quite convenient for both the caller side and the called side.

## Claims

1. A telephone communication system comprising a wireless communication terminal, a base station for sending and receiving a signal to and from the wireless communication terminal via a wireless access network, an exchange connected with the base station, and a relaying network interconnecting the exchanges or an IP network connected via inter-network connecting devices, wherein when said wireless communication terminal is connected with a hands-free device, the wireless communication terminal sends information indicating that the wireless communication terminal is connected with said hands-free device to said base station, said exchange or a server provided in said IP network for saving the information; and when a phone call is made to the wireless communication terminal connected with said hands-free device, said base station, said exchange or said server sends information indicating that said called wireless communication terminal is connected with said hands-free device to the caller.

2. The telephone communication system according to claim 1, wherein when a phone call is made to the wireless communication terminal connected with said hands-free device, said base station, said exchange or said server sends information indicating that said wireless communication terminal of the called party is connected with said hands-free device to said caller before a connection between the wireless communication terminal and said caller is established.

3. The telephone communication system according to claim 1 or 2, wherein at said time of making a phone call, said caller side sends an operation directing signal indicating a request of said caller in the case where said wireless communication terminal of the called party is connected with a hands-free device to said base station, said exchange or said server, or said caller side sends an operation directing signal indicating a request of said caller according to the state that said wireless communication terminal of the called party is connected with a hands-free device to said base station, said exchange or said server after it received information indicating that said wireless communication terminal of the called party is connected with said hands-free device from said base station, said exchange or said server; and said base station, said exchange or said server performs predetermined operation according to the operation directing signal.

4. A mail sending/receiving system comprising a wireless communication terminal, a base station for sending and receiving a signal to and from the wireless communication terminal via a wireless access network, an exchange connected with the base station, a relaying network interconnecting the exchanges or an IP network interconnecting said exchanges or said base stations via inter-network connecting devices, and a server provided in the IP network, wherein when said wireless communication terminal is connected with a hands-free device, the wireless communication terminal sends information indicating that the wireless communication terminal is connected with said hands-free device to said base station, said exchange or said server for saving the information; and when a piece of mail is sent to a mail address allocated to the wireless communication terminal connected with said hands-free device, said base station, said exchange or said server sends information indicating that said wireless communication terminal corresponding to the destination address of said piece of mail is connected with said hands-free device to an address from which said piece of mail is sent.

5. The mail sending/receiving system according to claim 4, wherein when a piece of mail is sent to a mail address allocated to a wireless communication terminal connected with said hands-free device, said base station, said exchange or said server sends information indicating that said wireless communication terminal corresponding to the destination address of said piece of mail is connected with said hands-free device to an address from which said piece of mail is sent without distributing said piece of mail to the wireless communication terminal.

6. The mail sending/receiving system according to claim 4 or 5, wherein at said time of sending a piece of mail, a sender side of said piece of mail sends operation directing information indicating a request of said sender of the mail in the case where said wireless communication terminal corresponding to the destination address of said piece of mail is connected with a hands-free device to said base station, said exchange or said server, or said mail sender side sends operation directing information indicating a request of said sender of the mail according to the state that said wireless communication terminal corresponding to the destination address of said piece of mail is connected with a hands-free device to said base station, said exchange or said server after it received information indicating that said wireless communication terminal corresponding to the destination address of said piece of mail is connected with said hands-free device from said base station, said exchange or said server; and said base station, said exchange or said server performs predetermined operation according to the operation directing information.

7. The telephone communication system or the mail sending/receiving system according to any one of claim 1 to claim 6, wherein a switch is provided for a headphone terminal section of said wireless communication terminal, and said switch is turned on when a connection terminal of said hands-free device is connected and turned off when the connection terminal is disconnected so that the system determines whether said wireless communication terminal is connected with said hands-free device or not by determining whether said switch is on or off.
